# EUROPEAN PATENT SPECIFICATION

(11) **EP 0 393 129 B1**
(45) Date of publication and mention of the grant of the patent: **31.05.1995**
(21) Application number: 89900994.8
(22) Date of filing: 02.12.1988
(51) Int. Cl.: C08F 2/44

(54) **CAST POLYMERIC SINK WITH HIGH THERMAL CYCLING RESISTANCE**
GEGOSSENES POLYMER MIT HOHEM WIDERSTAND GEGEN WÄRMESCHOCKS
EVIER EN POLYMERE COULE, A HAUTE RESISTANCE AUX CHOCS THERMIQUES

(30) Priority: 04.12.1987 EP 87117933; 04.12.1987 EP 87117934
(43) Date of publication of application: 24.10.1990
(73) Proprietor: E.I. DU PONT DE NEMOURS AND COMPANY, Wilmington Delaware 19898 (US); Schock & Co. GmbH, D-73614 Schorndorf (DE)
(72) Inventor: FRANK, Lothar, D-7067 Pluderhausen (DE); OTREMBA, Edward, Daniel, Hamburg, NY 14075 (US); POHL, Taymond, Joseph, Wilmington, DE 19809 (US); SCHLIER, Horst, D-7060 Schorndorf (DE)
(74) Representative: Hoeger, Stellrecht & Partner
(86) International application number: US8804322
(87) International publication number: WO8905310

(56) References cited:
- EP-A- 0 229 262
- AU-A- 21 919
- DE-A- 1 234 972
- DE-A- 3 621 151
- US-A- 2 136 423
- US-A- 3 761 220
- US-A- 4 077 755
- PLASTVERARBEITER, Vol. 35, no. 5, May 1984, pages 74-81

## Description

### BACKGROUND

The invention relates to a formed article obtainable by polymerizing a stable, fluid composition comprising a syrup of methyl methacrylate alone or mixed with some preformed polymer, particles of alumina trihydrate and a coupling agent creating a bond between the polymerized methyl methacrylate and the incorporated alumina trihydrate particles.

The casting of related polymers under pressure to prevent gas bubble formation is described in U.S. Patent No. 2,136,423, Fields et al (1938).

Compositions as described above are known from the prior art, especially from U.S. Patent No. 3,847,865, Duggins (1974) or corresponding DE-A 20 06 197. These prior art documents disclose the use of alumina trihydrate as a filler in an acrylic polymer, leading to a product with a structure, the properties of which, such as translucency, weather resistance, flame resistance, resistance to stress cracking and resistance to staining or etching by common household acids and alkalis, make the structure uniquely suitable for a building product.

Particularly in view of these properties, alumina trihydrate-filled acrylic structures are also useful as kitchen or bathroom counter-tops, particularly those with built in sinks.

The special features of these acrylic structures filled with alumina trihydrate were due in part to the special initiator systems used for polymerization. These systems comprise a small amount of a water-soluble peroxide compound and a small amount of water as a promoter for the peroxide compound. Additionally, surface water carried by the alumina trihydrate also promotes polymerization and contributes to the unexpected product properties mentioned above.

Furthermore, compositions as described above are known from U.S. Patent No. 4,221,697, Osborn et al (1980). Instead of, or in addition to, the coupling agent the compositions comprise polymeric dispersants. The purpose of the teaching disclosed therein is to create a bond between the inorganic particles and the polymer matrix which is at least as strong as the internal cohesive strength of whichever of these two constituents is the weaker.

A cast polymeric sink is known from EP-A 229 262, which comprises an insert covering the bottom of the sink. The hardness of the insert material is selected such that scratches may be avoided or may be easily removed by simple polishing or the like.

However, the mechanical and physical long-term properties, such as resistance to stress cracking and resistance to staining or etching were found to be less than optimum for certain products, particularly for molded products.

### BRIEF DESCRIPTION OF THE DRAWINGS

Fig. 1 is a perspective view of a double-bowl sink made according to the invention.

Fig. 2 is a plan view of the sink showing cutting plane lines 3-3, 4-4 and 5-5.

Figs. 3, 4 and 5 are vertical cross-sections along said cutting planes respectively.

Fig. 6 is a plot of temperatures of mold faces during a casting and curing cycle.

### SUMMARY OF THE INVENTION

The present invention provides a cast article in the shape of a sink having an upper portion, a concave body connected to the upper portion and suitable for holding water, and a bottom portion with a drain hole, said article comprising a matrix of polymerized methyl methacrylate filled with particles of alumina trihydrate, characterized in that said article has a thermal cycling resistance capable of withstanding without cracking at least 2000 cycles of alternating hot and cold water directed into the bottom 5 cm from the drain hole, each cycle lasting 6 minutes and comprising alternating flows of 3 liters/minute at 80°C for 3 minutes, then at 20°C for 3 minutes.

Preferably said article is produced or producible by a process of casting and curing in a set of male and female closed molds which are arranged to close progressively in proportion to matrix shrinkage upon curing, said molds being pressed together during cure with a pressure of at least about 0.3 MPa (3 bars), and curing at temperatures above the glass transition temperature of the matrix.

Preferably the matrix contains 30-70% by weight of alumina trihydrate, based on total solids.

### DETAILED DESCRIPTION

After long efforts to produce sinks, especially kitchen sinks, with superior resistance to cracking due to thermal cycling due to hot and cold water, it was finally discovered that close control of a number of related factors can greatly improve such resistance.

One of the most important features of the invention is the increase in resistance of the products to alternating stresses caused by thermal cycles of hot and cold water. Whereas products known from the prior art crack after 280 to 370 cycles, the new products can go more than 2,000 cycles without cracking.

Preferably using a closed mold casting apparatus similar to that of EP-A-19,867, Schock (1983), a high pressure is kept on the mold to follow the shrinking of the polymer upon curing. At least about 3 bars pressure is desirable to keep the mold closed, preferably at least 0.5 MPa (5 bars), more preferably 0.7 to 0.9 MPa (7 to 9 bars), most preferably about 0.9 MPa (9 bars).

Furthermore, is is desirable that the pressure be enough to minimize or prevent the formation of gas bubbles within the casting upon polymerization.

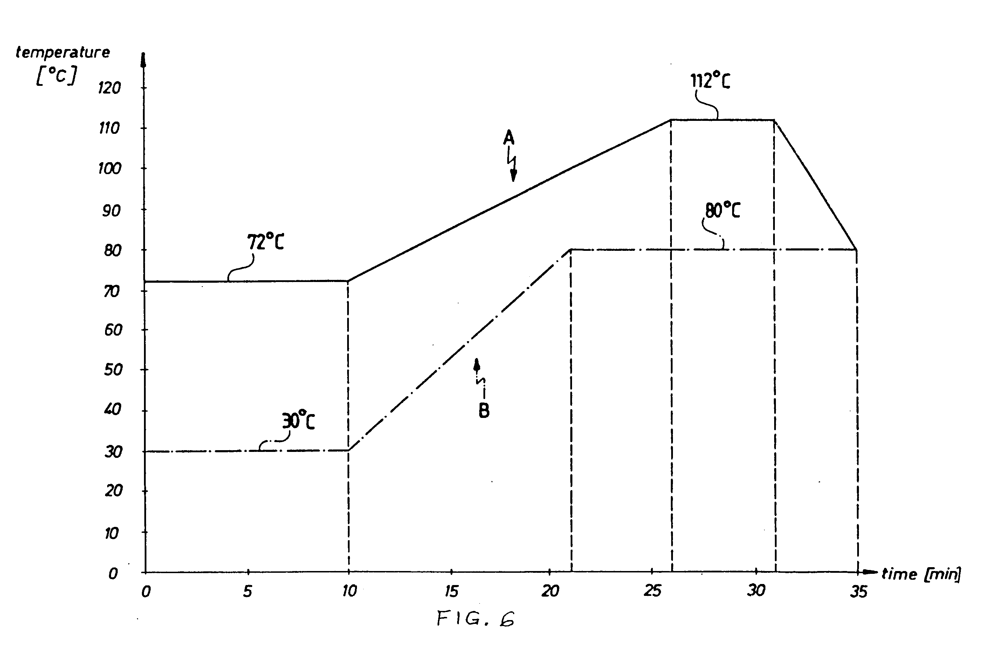

Preferably the curing temperature is kept above the glass transition temperature (Tg) of the matrix polymer, about 105°C for pure polymethyl methacrylate, for long enough to give the desired thermal cycling resistance. In some circumstances, slightly lower temperatures may suffice, but it is preferred generally to be above the Tg for part of the curing cycle such as five minutes toward the end of a 35 minute casting and curing cycle. As shown in Fig. 6, curve B represents the temperature of the heating-cooling water outlet from the female mold and curve A the water outlet from the male mold. The hotter, male mold is the locus of faster curing and produces a smoother surface.

To our surprise, we found that the casting conditions of the invention produce not only the superior thermal cycling resistance but also anomalous behavior in thermal analysis. Pieces cut from the bottom of such sinks change hardly at all in thickness or in lateral dimensions when heated from room temperature (27°C) to temperatures below 105°C, but then change greatly just above 105°C. And even when the change occurs it is of an unexpected type. On heating above 105°C, thickness grew dramatically and the pieces shrank in the horizontal plane. An oblong hole in the pieces became smaller. Upon reflection, what was happening was that the process built in controlled stresses that prevented significant thermal expansion below the Tg, then annealing above the Tg released the stresses, causing substantial expansion, contraction, and a tendency to crack. Since the temperatures to which a kitchen or bathroom sink are normally exposed are between 0°C and 100°C, this results in high resistance to thermal cycling in practical applications.

Although random and uncontrolled stresses are traditionally anathema in cast products, the stresses of the present invention have proven to be very helpful.

The advantage of the coupling agent selected according to the invention in a formed article, in contrast to the prior art, may also be due in part to a phenomenon whereby the coupling between the particle and the polymerized methyl methacrylate is of moderate strength so that when a crack propagates through the polymerized methyl methacrylate matrix to the interface with an alumina trihydrate particle, it apparently tends to follow an irregular path around the surface of this particle. This absorbs substantially more energy than a cleaving of the alumina trihydrate particle and makes the product tougher and more resistant to various kinds of fractures produced by mechanical stress.

In certain preferred embodiments, electron microphotographs show the differences in fracture modality of the products according to the invention and products obtained according to the teaching of the prior art.

In certain embodiments, the formed articles according to the invention comprise a matrix of polymerized methyl methacrylate incorporating particles of alumina trihydrate bound to the matrix, wherein the binding force at the interfaces between the polymerized methyl methacrylate matrix and the alumina trihydrate particles is less strong than the internal binding force between the cleavage planes and the alumina trihydrate particles.

Superiority of the mechanical properties of the new formed articles can be shown for example by thermal cycling tests. These tests run precisely controlled hot and cold water streams alternately through the formed article, e.g. a sink, and measure the number of cycles until the sink cracks. Whereas formed articles obtainable by polymerizing curable compositions according to prior art crack after 280 to 370 cycles, the products obtained by using the curable composition according to the invention can go more than 2,000 cycles without cracking.

While we do not wish to be committed to a particular hypothesis, the superiority of the mechanical properties of the products according to the invention also may be based in part on the feature that the curable and moldable composition for the production of the formed articles comprises a special coupling agent, which is selected to be a moderately strong coupler to create a binding force at the interfaces between the polymerized methyl methacrylate and the alumina trihydrate particles which is less strong than the internal binding force between the cleavage planes of the alumina trihydrate particles. In samples produced according to the teaching of the prior art there is a substantial amount of cleavage through the alumina trihydrate particles when a piece fractures. The fracture propagates along flat planes absorbing little energy. Instead, in samples according to the invention, the coupling achieved by the coupling agent between the PMMA matrix and the alumina trihydrate particles is looser so that, when a crack propagates through the PMMA matrix to the interface with an alumina trihydrate particle, it does not generally cleave through the particle but instead follows an irregular path around the surface of the particle. This absorbs substantially more energy than cleaving the alumina trihydrate particle and therefore makes the product tougher and more resistant to various kinds of fractures, especially thermal cycling cracking.

Preferably, the coupling agent comprises silanes, particularly organosilanes. Best results were obtained by using a coupling agent comprising organosilanes mixed with a metal acid ester or an organic complex salt of transition metals of groups IV and V of the periodic system. An organosilane mixed with a zirconium acid ester is particularly preferred, such as in accordance with EP 253,211, Amort et al, published January 20, 1988, EP 107,764, Hanisch et al, published May 9, 1984, or U.S. Patent No. 4,771,095, Hanisch et al (September 13, 1988).

Preferred compositions contain a total amount of alumina trihydrate particles in relation to the mass of the syrup from 154 to 190% by weight.

More preferably the total amount of alumina trihydrate particles is from 163 to 181% by weight, most preferably 172%.

Suitable organosilanes are for example, γ-methacryloxypropyl-trimethoxysilane and/or vinyltrimethoxysilane.

The amount of coupling agent in relation to the total mass of alumina trihydrate is chosen preferably in the range of 1.45 to 5.23% by weight, more preferably the amount of coupling agent is about 2.79% by weight.

The syrup used in the composition comprises an amount of polymerized methyl methacrylate in relation to the total mass of the syrup which is preferably from 10 to 30% by weight, more preferred from 16 to 24% by weight, and most preferably 18% by weight. The syrup can be made by polymerization techniques known in the art such as according to U.S. Patent No. 3,145,600, Munn (1960) or by dissolving polymer in monomer. Due to the addition of a prepolymer within the limits, shrinkage of the mass during the polymerization process is reduced but the syrup is still obtained with a castable viscosity.

Although the molecular dimensions of polymethyl methacrylate are not critical to the properties of the composition it is preferable to use polymerized methacrylate with a molecular weight of 60,000 to 150,000, more preferably 87,000 to 115,000. The methyl methacrylate most preferred has a molecular weight of 100,000 +/- 10,000.

Fundamental requirements for achieving the best possible mechanical and chemical properties from polymerized methyl methacrylate are attainment of the highest possible values of molecular weight and degree of conversion of monomer into polymer. Generally these requirements are met by using a low concentration of free radical initiator, long polymerization times and by completing the reaction with an increase in mold temperature. However this would lead to mold cycle times that would be uneconomic.

One method of shortening cycle-times without decreasing molecular weight is adding multifunctional cross-linkers to the composition, whereby any suitable polyunsaturated cross-linking compound can be used.

In addition cross-linkers help control the elongation or elasticity of the finished product, whereby the cross-linker effect is inversely related to the quantity of alumina trihydrate particles used.

Preferred cross-linkers are multi-functional cross-linkers, especially di-functional and tri-functional cross-linkers. Examples for suitable cross-linkers are ethylene dimethylacrylate, propylene dimethylacrylate, polyethylene-glycol dimethylacrylate, divinyl benzene, diallyl phthalate, 1,3-butanediolmethacrylate, 1,4-butanediolethyleneglycol dimethacrylate or neopentyl glycol dimethacrylate as di-functional cross-linkers and trimethylol propane trimethacrylate, triallyl cyanurate, pentaerythritol tetramethacrylate, allylmethacrylate, hydroxyethylmethacrylate or hydroxypropylmethacrylate as tri-functional cross-linkers. The most often used cross-linking agent is trimethylolpropanetrimethacrylate.

As cross-linkers increase the shrinkage rate care must be taken with respect to the amount of cross-linkers added to the composition. If too much of the cross-linking compound is present the product could become so stressed that it would crack and craze during the polymerization process. Therefore the cross-linkers are added to the composition in relation to the mass of the syrup in preferably an amount of 1 to 5% by weight, more preferably in an amount of 2.2% by weight.

The process for the production of a formed article by using the composition of the present invention can be very much improved by adding an internal mold release agent to the composition which facilitates the separation of the mold and the molding. The total amount of the internal mold release agent in the relation to the mass of the syrup is preferably from 0.25 to 1% by weight or preferably 0.3% by weight.

Internal mold release agent compounds are selected with regard to their solubility properties, whereby compounds are preferred which are soluble in monomeric methyl methacrylate and insoluble in polymerized methyl methacrylate so that the internal mold release agent is expelled during the polymerization process to the outer surface of the article being formed. Suitable compounds having these properties are, for example, stearic acid, succinic acid or lauric acid.

Compositions according to the invention exhibit excellent stability on storage. Any settlerent is easily redispersed. In the case where it is desired to prevent settlement, this can be achieved by the addition of colloidal fumed silica which acts as a thickening agent slowing down the settling rate of the inorganic filler particles. It is added to the syrup, especially in a range from 0.1 to 9% by weight in relation to the mass of the syrup. More preferably fumed silica is added in the range from 0.1 to 3% by weight.

Preferred colloidal fumed silica exhibit hydrophilic properties, such as "Cab-O-Sil" EH5 which is obtainable from Cabot GmbH, West Germany ("Cab-O-Sil" is a registered trademark). The hydrophilic colloidal fumed silica is preferably added in an amount of about 1.4% by weight in relation to the total mass of the syrup. The preferable average particle size is about 1 »m.

In case hydrophobic silica is used, this silica is preferably treated with organo silanes; an example for such a silica is HDK K 2000 obtainable from Wacker Chemie GmbH, West Germany. The hydrophobic silica is preferably added to the composition in an amount of about 3% by weight in relation to the mass of the syrup.

Any one of the types of silica mentioned above preferably has a BET surface of 100 to 400 m²/g, determined according to the DIN method 66131.

The particles of the inorganic filler, namely the alumina trihydrate particles should be finely divided. The particle size is somewhat critical, firstly because too small particles cause sticking of the formed article to the mold as the small particles become lodged in surface irregularities on the mold face and, secondly, coarser particles tend to settle too fast in the composition which could be critical in a cure process with a usual cycle time of 30 to 35 minutes. Furthermore the particle size influences, together with other aspects of the system, properties of formed articles such as fatigue life. Therefore, the average particle size of the alumina trihydrate particles should range from 1 to 100 »m. More preferably the alumina trihydrate particles have a size from 5 to 50 »m, whereas most preferred particles have a size of about 45 »m.

For curing and molding the composition according to the invention initiators for the polymerization process are added to the stable and fluid compositions described above. Preferred initiators are insoluble in water. The initiator may be a dual thermal initiator system comprising a first initiator and a second initiator having a one hour half-lifetime at different temperatures, the first and second initiators being preferably selected from the group of peroxide initiators. The temperatures, at which the first and second initiators have a half-lifetime of one hour, differ preferably by at least 10 through 15°C, whereby the temperature of the one hour half-lifetime of the first initiator is between 50 and 60°C and, for the second initiator, between 75 and 85°C. More preferred is an initiator system composed of a first initiator having a one hour half-lifetime temperature of about 57°C and a second initiator having a one hour half-lifetime temperature of about 80°C. Such initiator systems enable very good control of the polymerization rate by controlling the temperature of the mold during the cure process.

There is a desired relationship between the initiators and the mold temperatures. Preferably, the initiator used comprises a first initiator compound having a first one hour half-lifetime temperature and a second initiator compound having a second one hour half-lifetime temperature, the second half-lifetime temperature being higher than the first one, and that the starting temperature of the first part is kept between the one hour half-lifetime temperatures of the first and second initiators, whereas the end temperature of the first and second parts of the mold is kept at least at a level equal to the one hour half-lifetime temperature of the second initiator. Also preferably, the temperature difference between the first part of the mold and the second part is at least about 10°C per cm thickness of the article.

The first initiator may be selected from the group of peroxydicarbonates; examples for suitable first initiators are bis (4-tert-butylcyclohexyl) peroxydicarbonate, γ-cumylperoxyneodecanoate and t-butylperoxyneodecanoate.

Suitable compounds for use as second initiators are, for example, dilauroxylperoxide, diisononanoyl, dilauroyl or didecanoyl peroxide, 2.5-dimethyl-2.5-bis (2-ethyl hexoyl peroxy) hexane, and t-butyl- peroxy-pivalate.

The initiator system comprises the first and second initiators preferably in weight proportions ranging from 4 to 1 through 1 to 4 or more preferably from 1 to 1 through 1 to 4.

The total amount of initiators added to the composition in relation to the mass of the syrup is preferably from 0.3 to 1% by weight. Very good results were obtained by using an initiator system comprising 0.3% by weight bis (4-tert-butylcyclohexyl) peroxydicarbonate and 0.6% by weight dilauroylperoxide.

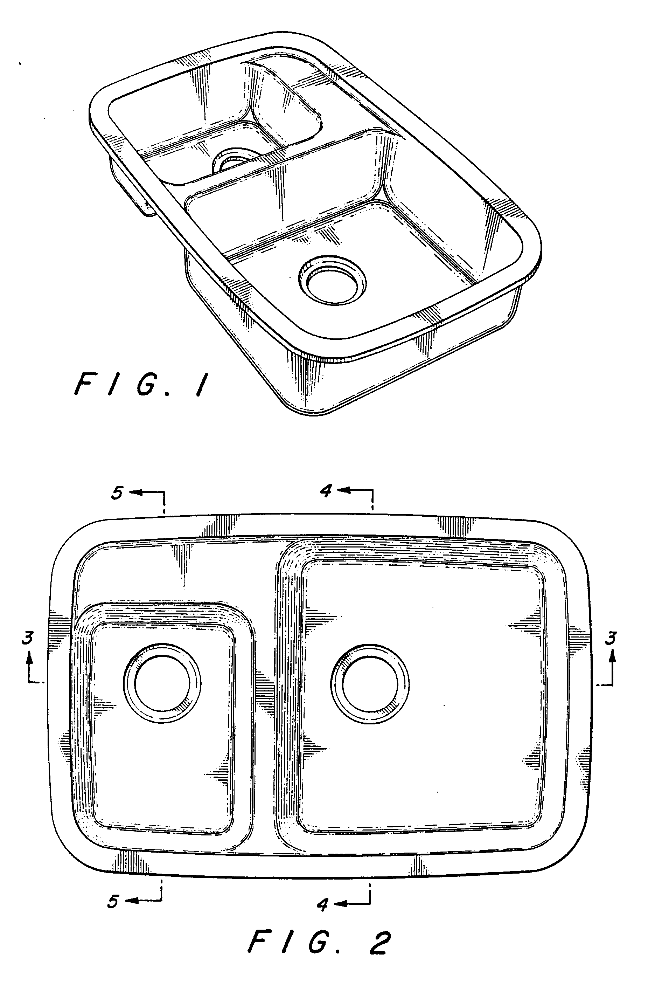

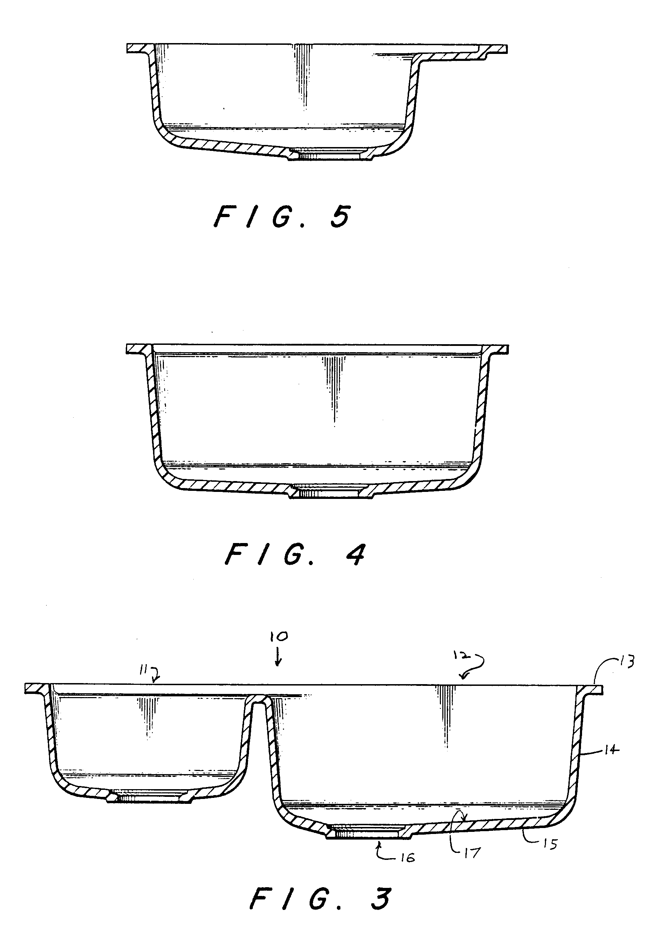

Turning now to Figs. 1-5 of the drawings, as best seen in Fig. 3, double-bowl sink 10 has a smaller left bowl 11 and a larger right bowl 12. Of course, the invention would work also with a single bowl sink. Bowl 12 has a lip or upper portion 13, concave body or wall 14 and bottom portion 15. Drain hole 16 is in bottom portion 15. At about spot 17 is where the water flows of the thermal cycling test are directed. This is about where the water from the faucet would often hit and is about 5 cm from drain hole 16 in a typical sink or about 1/3 of the distance from drain hole 16 to wall 14.

The production process of a formed article according to the invention can be separated into four different steps:
1. Production of a solution of polymeric methyl methacrylate.
   A tank is filled with monomeric methyl methacrylate and held at a temperature of about 40°C. Milled polymethyl methacrylate is added and blended by continuous stirring for several hours. The solution is then cooled to 20°C.
2. Production of a non-reactive composition.
   Proceeding on the basis of the solution of polymerized methyl methacrylate in monomeric methyl methacrylate, alumina trihydrate particles, cross-linking agents, coupling agents and thickening agents, i.e. colloidal silica, are added. During this step the temperature of the tank is held at about 20°C.
3. Production of the curable and moldable composition.
   By adding the initiators the composition becomes reactive. In this step also the required pigments and mold release agents are added. The temperature of the tank is still held at about 20°C. By repeated stirring settling of the alumina trihydrate particles is prevented. A vacuum of -75 kPa (-0.75 bars) (gauge pressure) is drawn on this resulting blend to evacuate any air in the blend.
4. Reaction injection molding process.
   A predetermined amount of the blend is provided through a port to a closed mold. The port is sealed and the mold held shut at a pressure of 0.8 MPa (8 bars); preferably the closed mold has a male mold half to produce the better cast surface and a female mold half for a less good cast surface. These two halves are provided with heating and cooling means, such as channels inside the halves for conveying water. The water is heated to a desired temperature to initiate polymerization. The temperature of the mold is continuously or multiply controlled by a micro-processor temperature control system. The male mold half receives hotter water than the female mold half, preferably steam-heated and appropriately pressurized. This ensures that the polymerization starts first at the male half, giving a smoother surface. At the beginning, the inlet water temperature may be 3 to 4°C higher than the outlet water temperature; however, the exothermic curing reaction generates heat and the outlet temperature may eventually be higher than the inlet temperature. It will be appreciated by those skilled in the art that the temperature in the center of the curing mixture may be hotter than that of the surface in thick sections. Optimum processing conditions are dependent on the size and geometry of the product being produced, but the cycle time in the mold for a kitchen sink of 30 to 35 minutes is desirable.
   In a preferred cure process for polymerization of a composition according to examples 1, 2 or 3, as illustrated in Fig. 6, the male mold half is heated to a starting temperature of 72°C. This temperature is held constant for about 10 minutes. The female mold half is controlled for a starting temperature of about 30°C, that is lower than the 10 hour half-lifetime temperature of the initiators used, for 10 minutes.
   The temperature of the male mold half is then constantly increased for 16 minutes to a temperature level of 112°C and then held constant for 5 minutes. To finish the cure cycle the temperature of the male mold is lowered within 4 minutes to an end temperature of 80°C as the cure process on this side of the article is already complete.
   The female half of the mold is heated after the starting period of the cure process to an end temperature of 80°C within 11 minutes and then held constant for the rest of the cure cycle time of 35 minutes.
   The article formed in this process has a thickness of about 2 cm. The temperature difference of the male and the female mold halves is at least 20°C during the whole cure process, i.e. at least 10°C per cm thickness of the finished article. This ensures a sufficient different polymerization rate of the good face side and the less good face side, that is the male mold half and the female mold half, so that molding defects, typically shrink marks, can be avoided on the show-face or good side of the article.
   The temperature is preferably controlled at the water exit of the mold as this allows a closer control of the temperature in the article cured than a temperature control at the water inlet.
   Generally, the temperature of the male mold half can be raised to a temperature in the range of 110 to 120°C, and can go as high as 135°C in some cases. Using the temperature profiles described above, however, it is preferred to control this temperature as close as possible to the value of 112°C, as mentioned above.
   The mold is kept closed during the whole reaction time, and is opened only after the cure process of the formed article is complete.

In the following, three examples for the composition according to the invention are given for illustration.

### Example 1

The syrup is composed of a solution of 20 % by weight poly-methyl methacrylate in monomeric methyl methacrylate in relation to the mass of the syrup. All the percentage values given below relate by weight to the total moss of the syrup. The following compounds are added to this syrup:
2.2 % trimethylol propane trimethacrylate as a cross-linking agent
4.8 % of a mixture of vinyltrimethoxysilane as an organosilane and a zirconium acid ester as coupling agents
0.3 % of bis (4-t-butylcyclohexyl) peroxydicarbonate as a first initiator having a one hour half-lifetime temperature of 57°C
0.6 % dilauroylperoxide as a second initiator having a one half-lifetime temperature of 80°C
0.3 % of stearic acid as a mold release agent
3.0 % of colloidal fumed silica with hydrophobic properties which is obtainable as HDK H 2000 from Wacker Chemie GmbH, FRG
172 % of alumina trihydrate obtainable as Alcoa C 33 from Aluminium Company of America, U.S.A. having an average particle size of about 45 »m appropriate pigments, for example
1.5 % titanium dioxide,
0.14 % of a black pigment and
0.17 % of a yellow pigment.
These ingredients are mixed and molded as described above.

### Example 2

The syrup is composed of a solution of 18 % by weight poly-methyl methacrylate in monomeric methyl methacrylate in relation to the mass of the syrup. All the percentage values given below relate by weight to the total mass of the syrup. The following compounds are added to this syrup:
2.2 % trimethylol propane trimethycrylate as a cross-linking agent
4.8 % of a mixture of methacryloxypropyl trimethoxysilane as an organosilane and a zirconium acid ester as coupling agents
0.3 % of bis (4-t-butylcyclohexyl) peroxydicarbonate as a first initiator having a one hour half-lifetime temperature of 57°C
0.6 % of dilauroylperoxide as a second initiator having a one-hour half-lifetime temperature of 80°C
0.3 % of stearic acid as a mold release agent
1.4 % of colloidal fumed silica with hydrophobic properties which is obtained as cab-o-sil EH 5 from Cabot GmbH, FRG, having an average particle size of 1 »m
172 % of alumina trihydrate obtainable as Alcoa C 33 from Aluminium Company of America, U.S.A, having an average particle size of about 45 »m appropriate pigments, for example
1.5 % titanium dioxide
0.14 % of a black pigment and
0.17 % of a yellow pigment.
These ingredients are mixed and molded as described above.

### Example 3

The syrup is composed of a solution of 22 % by weight poly-methyl methacrylate in monomeric methyl methacrylate in relation to the mass of the syrup. All the percentage values given below relate by weight to the total mass of the syrup. The following compounds are added to this syrup:
2.2 % trimethylol propane trimethycrylate as a cross-
linking agent 4.8 % of a mixture of γ-methacryloxypropyl trimethoxysilane as an organosilane and a zirconium acid ester as coupling agents
0.3 % of bis (4-t-butylcyclohexyl) peroxydicarbonate as a first initiator having a one hour half-lifetime temperature of 57°C
0.6 % of dilauroylperoxide as a second initiator having a one-hour half-lifetime temperature of 80°C
0.5 % of stearic acid as a mold release agent
1.4 % of colloidal fumed silica with hydrophobic properties which is obtained as cab-o-sil EH 5 from Cabot GmbH, having an average particle size of 1 »m
164 % of alumina trihydrate obtainable as Alcoa C 333 from Aluminium Company of America, U.S.A., having an average particle size of about
6,5 to 9,5 »m appropriate pigments, for example
1.5 % titanium dioxide
0.14 % of a black pigment and
0.17 % of a yellow pigment.
These ingredients are mixed and molded as described above.

## Claims

1. A cast article in the shape of a sink having an upper portion, a concave body connected to the upper portion and suitable for holding water, and a bottom portion with a drain hole,
said article comprising a matrix of polymerized methyl methacrylate filled with particles of alumina trihydrate, characterized in that said article has a thermal cycling resistance capable of withstanding without cracking at least 2000 cycles of alternating hot and cold water directed into the bottom 5 cm from the drain hole, each cycle lasting 6 minutes and comprising alternating flows of 3 liters/minute at 80°C for 3 minutes, then at 20°C for 3 minutes, said article being obtainable by a process of polymerizing a stable, fluid composition comprising a syrup of methyl methacrylate alone or mixed with some preformed polymer, particles of alumina trihydrate and a coupling agent creating a bond between the polymerized methyl methacrylate and the incorporated alumina trihydrate particles, said coupling agent comprising silanes in the range of 1.45 to 5.23 % by weight, based on the total mass of alumina trihydrate.

2. The article of claim 1 wherein the matrix contains, by weight, 30 - 70 % alumina trihydrate.

3. The article of claim 1 made by a process wherein the molds are pressed together by a pressure in the range of at least 0.5 MPa (5 bars).

4. The article of claim 3 wherein the pressure is in the range of 0.7 to 0.9 MPa (7 to 9 bars).

5. The article of claim 3 wherein the temperature of curing is at least 105°C for enough of the cure to provide the thermal cycling resistance of at least 2000 cycles.

6. The article of claim 1 wherein the matrix also contains a coupling agent selected to create a binding force at the interfaces between the matrix and the alumina trihydrate particles which is less strong than the internal bonding force between cleavage planes of the alumina trihydrate particles.

7. The article of claim 6 wherein the coupling agent comprises organo silanes and a zirconium acid ester.

8. The article of claim 6 made by a process wherein the molds are pressed together by a pressure of about 0.9 MPa (9 bars) and curing is done at a temperature reaching about 110°C.

9. The article of claim 1 is made by a process of polymerizing said curable composition under pressure and temperature control using a sealed mold, whereby a first part of the mold is kept at least at the beginning of the polymerization process at a higher temperature than a second part so as to start polymerization at the first part of the mold, wherein the temperature difference between the first part of the mold and the second part is at least 10°C per cm thickness of the article, and
wherein an initiator is used comprising a first initiator compound having a first one hour half-lifetime temperature and a second initiator compound having a second one hour half-lifetime temperature, the
second half-lifetime temperature being higher than the first one, and that the starting temperature of the first part is kept between the one hour half-lifetime temperatures of the first and second initiators, whereas the end temperature of the first and second parts of the mold is kept at least at a level equal to the one hour half-lifetime temperature of the second initiator.

10. The article of claim 1 characterized in that
said article being producible by a process of casting and curing in a set of male and female closed molds which are arranged to close progressively in proportion to matrix shrinkage upon curing, said molds being pressed together during cure with a pressure high enough to prevent the formation of gas bubbles within the article, and curing at temperatures above the glass transition temperature of the matrix.

11. The article of claim 10 characterized in that said pressure is at least about 0.3 MPa (3 bars).

## Patentansprüche

1. Gegossener Artikel in Form eines Spül- bzw. Waschbeckens mit einem oberen Abschnitt, einem mit dem oberen Abschnitt verbundenen und für die Aufnahme von Wasser geeigneten konkaven Körper und einem Bodenabschnitt mit einer Abflußöffnung, wobei dieser Artikel eine Matrix aus polymerisiertem Methylmethacrylat gefüllt mit Aluminiumoxidtrihydrat-Teilchen umfaßt, dadurch gekennzeichnet, daß dieser Artikel eine Temperaturwechselbeständigkeit aufweist, die befähigt, zumindest 2000 Zyklen von abwechselnd 5 cm von der Abflußöffnung entfernt auf den Boden gerichtetem Heiß- und Kaltwasser ohne Rißbildung zu widerstehen, wobei jeder Zyklus 6 Minuten dauert und abwechselnde Ströme von 3 Liter/Minute für 3 Minuten bei 80°C, dann für 3 Minuten bei 20°C umfaßt, wobei dieser Artikel durch ein Verfahren erhältlich ist, bei dem eine stabile fluide Zusammensetzung polymerisiert wird, die einen Sirup von Methylmethacrylat allein oder vermischt mit einem vorgeformten Polymer, Aluminiumoxidtrihydrat-Teilchen und einem Haftvermittler, der eine Bindung zwischen dem polymerisierten Methylmethacrylat und den eingebrachten Aluminiumoxidtrihydrat-Teilchen herstellt, umfaßt, wobei der Haftvermittler Silane im Bereich von 1,45 bis 5,23 Gew.-%, bezogen auf die Gesamtmasse Aluminiumoxidtrihydrat, umfaßt.

2. Artikel nach Anspruch 1, worin die Matrix auf das Gewicht bezogen 30 bis 70 % Aluminiumoxidtrihydrat enthält.

3. Artikel nach Anspruch 1, hergestellt nach einem Verfahren, in dem die Formen mit einem Druck im Bereich von zumindest 0,5 MPa (5 bar) zusammengepreßt werden.

4. Artikel nach Anspruch 3, worin der Druck im Bereich von 0,7 bis 0,9 MPa (7 bis 9 bar) liegt.

5. Artikel nach Anspruch 3, worin die Härtungstemperatur zumindest 105°C beträgt, für ausreichende Härtung, um die Temperaturwechselbeständigkeit von zumindest 2000 Zyklen zu ergeben.

6. Artikel nach Anspruch 1, worin die Matrix auch einen Haftvermittler enthält, der so gewählt ist, daß er eine Bindungskraft an den Grenzflächen zwischen der Matrix und den Aluminiumoxidtrihydrat-Teilchen schafft, die weniger stark ist als die innere Bindungskraft zwischen Spaltebenen der Aluminiumoxidtrihydrat-Teilchen.

7. Artikel nach Anspruch 6, worin der Haftvermittler Organosilane und einen Zirkonium-Säureester umfaßt.

8. Artikel nach Anspruch 6, hergestellt nach einem Verfahren, bei dem die Formen mit einem Druck von etwa 0,9 MPa (9 bar) zusammengepreßt werden und die Härtung bei einer Temperatur erfolgt, die etwa 110°C erreicht.

9. Artikel nach Anspruch 1, hergestellt nach einem Verfahren zur Polymerisierung der härtbaren Zusammensetzung unter Druck- und Temperatursteuerung unter Verwendung einer geschlossenen Form, wobei ein erster Teil der Form zumindest am Beginn des Polymerisationsverfahrens auf einer höheren Temperatur gehalten wird als ein zweiter Teil, so daß die Polymerisation am ersten Teil der Form einsetzt, wobei die Temperaturdifferenz zwischen dem ersten Teil der Form und dem zweiten Teil zumindest 10°C pro cm Dicke des Artikels beträgt, und wobei ein Initiator verwendet wird, der eine eine erste Einstunden-Halbwertszeit-Temperatur aufweisende erste Initiatorverbindung und eine eine zweite Einstunden-Halbwertszeit-Temperatur aufweisende zweite Initiatorverbindung umfaßt, wobei die zweite Halbwertszeit-Temperatur höher als die erste ist, und die Ausgangstemperatur des ersten Teils zwischen den Einstunden-Halbwertszeit-Temperaturen des ersten und des zweiten Initiators gehalten wird, wohingegen die Endtemperatur des ersten und des zweiten Teils der Form zumindest auf einem Wert gehalten wird, der gleich der Einstunden-Halbwertszeit-Temperatur des zweiten Initiators ist.

10. Artikel nach Anspruch 1, dadurch gekennzeichnet, daß dieser Artikel nach einem Gieß- und Härteverfahren in einem Satz geschlossener Positiv- und Negativformen hergestellt werden kann, die proportional zur Matrixschrumpfung beim Härten geschlossen werden, wobei diese Formen während des Härtens mit einem Druck zusammengepreßt werden, der ausreichend ist, um die Bildung von Gasblasen in dem Artikel zu vermeiden, und Härtung bei Temperaturen oberhalb der Glasübergangstemperatur der Matrix erfolgt.

11. Artikel nach Anspruch 10, dadurch gekennzeichnet, daß der Druck zumindest etwa 0,3 MPa (3 bar) beträgt.

## Revendications

1. Article coulé sous la forme d'un évier ou lavabo ayant une partie supérieure, un corps concave relié à la partie supérieure et apte à retenir de l'eau, et un fond avec un orifice de drainage, ledit article comprenant une matrice de méthacrylate de méthyle polymérisé chargée de particules d'alumine trihydratée, caractérisé en ce que ledit article a une résistance aux chocs thermiques capable de résister sans fissuration à au moins 2 000 cycles d'eau alternativement chaude et froide dirigée dans le fond à 5 cm de l'orifice de drainage, chaque cycle étant d'une durée de 6 minutes et comprenant alternativement des courants de 3 litres par minute à 80°C pendant trois minutes, puis à 20°C pendant trois minutes, ledit article pouvant être obtenu par un procédé de polymérisation d'une composition fluide stable comprenant un sirop de méthacrylate de méthyle seul ou mélangé avec une certaine quantité de polymère préformé, des particules d'alumine trihydratée et un agent de couplage créant une liaison entre le méthacrylate de méthyle polymérisé et les particules d'alumine trihydratée incorporées, ledit agent de couplage comprenant une quantité de silanes située entre 1,45 et 5,23 % en masse par rapport à la masse totale d'alumine trihydratée.

2. Article de la revendication 1, dans lequel la matrice contient, en masse, 30 à 70 % d'alumine trihydratée.

3. Article de la revendication 1 fabriqué par un procédé dans lequel les moules sont appuyés l'un contre l'autre sous une pression égale au moins à 0,5 MPa (5 bars).

4. Article de la revendication 3, où la pression est située dans la région allant de 0,7 à 0,9 MPa (7 à 9 bars).

5. Article de la revendication 3, la température de durcissement étant d'au moins 105°C pendant une partie suffisante du durcissement pour donner la résistance aux chocs thermiques pour résister à au moins 2 000 cycles.

6. Article de la revendication 1, dans lequel la matrice contient aussi un agent de couplage choisi pour créer une force de liaison aux interfaces entre la matrice et les particules d'alumine trihydratée moins forte que la force de liaison interne entre les plans de clivage des particules d'alumine trihydratée.

7. Article de la revendication 6, dans lequel l'agent de couplage comprend des organosilanes et un ester acide de zirconium.

8. Article de la revendication 6 fabriqué par un procédé dans lequel les moules sont appuyés l'un contre l'autre sous une pression d'environ 0,9 MPa (9 bars) et dans lequel le durcissement est effectué à une température atteignant environ 110°C.

9. Article de la revendication 1 fabriqué par un procédé de polymérisation de ladite composition durcissable sous contrôle de la pression et de la température en utilisant un moule fermé hermétiquement, une première partie du moule étant maintenue au moins au début du processus de polymérisation à une température supérieure à la température d'une seconde partie de façon à ce que la polymérisation débute dans la première partie du moule, la différence de températures entre la première partie du moule et sa seconde partie étant d'au moins 10°C par cm d'épaisseur de l'article, et
en utilisant un initiateur comprenant un premier composé initiateur ayant une première température à laquelle la demi-vie est de 1 heure et un second initiateur ayant une seconde température à laquelle la demi-vie est de 1 heure, la seconde température de demi-vie étant supérieure à la première et la température initiale de la première partie étant maintenue entre les températures auxquelles les demi-vies des premier et second initiateurs sont de 1 heure, tandis que la température finale des première et seconde parties du moule est maintenue au moins à un niveau égal à la température à laquelle la demi-vie du second initiateur est de 1 heure.

10. Article de la revendication 1, caractérisé en ce que ledit article peut être fabriqué par un procédé de coulée et durcissement dans un ensemble de moules mâles et femelles fermé disposé de telle sorte qu'il se ferme progressivement au fur et à mesure du retrait de la matrice au durcissement, lesdits moules étant appuyés l'un contre l'autre pendant le durcissement sous une pression suffisante pour empêcher la formation de bulles de gaz dans l'article, et le durcissement étant effectué à des températures supérieures à la température de transition vitreuse de la matrice.

11. Article de la revendication 10 caractérisé en ce que ladite pression est d'au moins environ 0,3 MPa (3 bars).
